# EUROPEAN PATENT APPLICATION

(11) **EP 4 462 583 A1**
(43) Date of publication of application: **13.11.2024**
(21) Application number: 23742731.5
(22) Date of filing: 06.01.2023
(51) Int. Cl.: H01M 50/536, H01M 10/0587, H01M 10/0525, H01M 50/538

(54) **BATTERY CELL AND MANUFACTURING METHOD THEREFOR, BATTERY, AND POWER CONSUMING DEVICE**

(30) Priority: 21.01.2022 CN 202220168527 U
(71) Applicant: Contemporary Amperex Technology Co., Limited, Ningde, Fujian 352100 (CN)
(72) Inventor: XU, Hu, Ningde, Fujian 352100 (CN); LI, Xing, Ningde, Fujian 352100 (CN); DONG, Jiao, Ningde, Fujian 352100 (CN); NIU, Shaojun, Ningde, Fujian 352100 (CN)
(74) Representative: Gong, Jinping
(86) International application number: PCT/CN2023/071081
(87) International publication number: WO 2023/138416

(57) **Abstract**

A battery cell (100) and a manufacturing method thereof, a battery (10), and an electric apparatus are provided. The battery cell includes: a housing (101); at least one wound cell (102) arranged in the housing, where each wound cell has a tab (105), and the tab at at least one end forms a flattened plane covering an end surface of the wound cell; a pole (103); and an adapting member (104) connecting the pole to the tab of the at least one wound cell. In the battery cell, the tab at at least one end on the wound cell forms the flattened plane covering the end surface of the wound cell, which can reduce the battery space occupied by the tab, and increase the winding space, thereby improving the energy density of the battery cell. The flattened plane can be stably connected to the adapting member, overcoming the need to align a plurality of tabs for a stable connection to the adapting plate. This improves production line efficiency and reduces battery production costs.

## Description

This application claims priority to Chinese Patent Application No. 202220168527.5, filed on January 21, 2022 and entitled "BATTERY CELL, BATTERY, AND ELECTRIC APPARATUS", which is incorporated herein by reference in its entirety.

### TECHNICAL FIELD

This application relates to the field of batteries, in particular to a battery cell and a manufacturing method thereof, a battery, and an electric apparatus.

### BACKGROUND

This section provides only background information related to this disclosure, which may not necessarily be the prior art.

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

Lithium-ion batteries, due to their advantages of high energy density, no memory effect, environmental friendliness, and lack of pollution, have been widely used in the field of new energy. As the core component of batteries, the wound cell is typically assembled in two ways: lamination and winding. The winding method is widely adopted by battery manufacturing enterprises due to its advantages of simple process, high assembly efficiency, and easy automation.

In the related art, the tab of the wound cell occupies a large space, which may result in a sacrifice of battery energy. In addition, requirements on the connection between the tab and the adapting plate are high, leading to low production efficiency of battery production lines and increased battery production costs.

### TECHNICAL PROBLEMS

Embodiments of this application provide a battery cell and a manufacturing method thereof, a battery, and an electric apparatus, so as to reduce the sacrifice of battery energy and the manufacturing costs of the battery.

### TECHNICAL SOLUTIONS

According to a first aspect, this application provides a battery cell, including a housing, at least one wound cell, a pole, and an adapting member; where the at least one wound cell is arranged in the housing, where each wound cell has a tab, and the tab at at least one end forms a flattened plane covering an end surface of the wound cell; and the adapting member connects the pole to the tabs of the at least two wound cells.

In some embodiments, the tab includes a first tab arranged at a first end of the wound cell and a second tab arranged at a second end of the wound cell, where the first tab forms a first flattened plane covering an end surface of the first end and/or the second tab forms a second flattened plane covering an end surface of the second end. The first tab at the first end of the wound cell forms the first flattened plane covering the end surface of the first end and/or the second tab at the second end forms the second flattened plane covering the end surface of the second end, such that the space occupied by the tab at the end surface of the wound cell can be reduced, and the winding space can be increased, thereby improving the energy density of the battery cell.

In some embodiments, the wound cell is formed by jointly winding a first electrode plate, a second electrode plate, and a separator located between the first electrode plate and the second electrode plate, where the positive electrode plate has a first current collector, and the first current collector includes a first coated region and a first uncoated region, the first uncoated region being located at the first end of the wound cell to form the first tab; and the second electrode plate has a second current collector, and the second current collector includes a second coated region and a second uncoated region, the second uncoated region being located at the second end of the wound cell to form the second tab, where after flattened, the first uncoated regions sequentially overlap with each other from the outside to the center of the wound cell so that the first tab forms the first flattened plane covering the end surface of the first end; and/or after flattened, the second uncoated regions sequentially overlap with each other from the outside to the center of the wound cell so that the second tab forms the second flattened plane covering the end surface of the second end. Both the first uncoated region and the second uncoated region are not die-cut, that is, both the first electrode plate and the second electrode plate adopt a full-tab design. The first uncoated regions and/or the second uncoated regions are flattened by a flattening device, such that after flattened, the first uncoated regions sequentially overlap with each other from the outside to the center of the wound cell and the first tab forms the first flattened plane covering the end surface of the first end; and/or after flattened, the second uncoated regions sequentially overlap with each other from the outside to the center of the wound cell and the second tab forms the second flattened plane covering the end surface of the second end. This can effectively reduce the battery space occupied by the full tab and increase the winding space, thereby improving the energy density of the battery cell.

In some embodiments, the wound cell is formed by jointly winding a first electrode plate, a second electrode plate, and a separator located between the first electrode plate and the second electrode plate, where the first electrode plate has a first current collector, and the first current collector includes a first coated region and a plurality of third uncoated regions spaced apart along a length direction of the first current collector, the plurality of third uncoated regions being located at the first end of the wound cell to form the first tab; and the second electrode plate has a second current collector, and the second current collector includes a second coated region and a plurality of fourth uncoated regions spaced apart along a length direction of the second current collector, the plurality of fourth uncoated regions being located at the second end of the wound cell to form the second tab; where after flattened, the plurality of third uncoated regions sequentially overlap with each other from the outside to the center of the wound cell while simultaneously sequentially overlapping with each other along a winding direction of the wound cell, so that the first tab forms the first flattened plane covering the end surface of the first end; and/or after flattened, the plurality of fourth uncoated regions sequentially overlap with each other from the outside to the center of the wound cell while simultaneously sequentially overlapping with each other along the winding direction of the wound cell, so that the second tab forms the second flattened plane covering the end surface of the second end. After flattened, the plurality of third uncoated regions sequentially overlap with each other from the outside to the center of the wound cell while simultaneously sequentially overlapping with each other along the winding direction of the wound cell, so that the first tab forms the first flattened plane covering the end surface of the first end; and/or after flattened, the plurality of fourth uncoated regions sequentially overlap with each other from the outside to the center of the wound cell while simultaneously sequentially overlapping with each other along the winding direction of the wound cell, so that the second tab forms the second flattened plane covering the end surface of the second end. This can overcome a drawback in the related art where a plurality of tabs after die-cutting need to be aligned to stably connect to the adapting member, facilitating the connection between the tabs and the adapting member, thereby improving production line efficiency and reducing battery production costs. In addition, this can reduce the space occupied by the connection part between the tabs and the adapting member at an end portion of the wound cell, increase the winding space, and effectively improve the energy density of the battery cell. Furthermore, an electrolyte can enter the wound cell from the overlapping gaps between the plurality of third uncoated regions and/or fourth uncoated regions, thereby enhancing the infiltration effect.

In some embodiments, the wound cell is formed by jointly winding a first electrode plate, a second electrode plate, and a separator located between the first electrode plate and the second electrode plate, where the positive electrode plate has a first current collector, and the first current collector includes a first coated region and a first uncoated region, the first uncoated region being located at the first end of the wound cell to form the first tab; and the second electrode plate has a second current collector, and the second current collector includes a second coated region and a plurality of fourth uncoated regions spaced apart along a length direction of the second current collector, the plurality of fourth uncoated regions being located at the second end of the wound cell to form the second tab; where after flattened, the first uncoated regions sequentially overlap with each other from the outside to the center of the wound cell so that the first tab forms the first flattened plane covering the end surface of the first end; and/or after flattened, the plurality of fourth uncoated regions sequentially overlap with each other from the outside to the center of the wound cell while simultaneously sequentially overlapping with each other along the winding direction of the wound cell, so that the second tab forms the second flattened plane covering the end surface of the second end. After flattened, the first uncoated regions sequentially overlap with each other from the outside to the center of the wound cell such that the first tab forms the first flattened plane covering the end surface of the first end; and/or after flattened, the plurality of fourth uncoated regions sequentially overlap with each other from the outside to the center of the wound cell while simultaneously sequentially overlapping with each other along the winding direction of the wound cell, so that the second tab forms the second flattened plane covering the end surface of the second end. This can effectively reduce the battery space occupied by a full tab in the related art and increase the winding space, thereby improving the energy density of the battery cell. This can overcome the drawback in the related art where a plurality of tabs after die-cutting need to be aligned to stably connect to the adapting member, facilitating the connection between the tabs and the adapting member, thereby improving production line efficiency and reducing battery production costs. In addition, this can reduce the space occupied by the connection part between the tabs and the adapting member at an end portion of the wound cell, increase the winding space, and effectively improve the energy density of the battery cell.

In some embodiments, the adapting member includes a first adapting member and a second adapting member, the first adapting member overlaps with the first tab of the at least one wound cell, and the second adapting member overlaps with the second tab of the at least one wound cell. When the first tab forms the first flattened plane covering the end surface of the first end, and the second tab forms the second flattened plane covering the end surface of the second end, the first adapting member and the second adapting member do not need to be bent. The first adapting member can directly overlap with the first tab in an interference manner and then be welded together, and the second adapting member can directly overlap with the second tab in an interference manner and then be welded together. This simplifies the production process of the battery cell. In addition, this can reduce the space occupied by the connection part between the tabs and the adapting member at an end portion of the wound cell, increase the winding space, and effectively improve the energy density of the battery cell.

In some embodiments, the first adapting member is provided with a first protrusion on a side close to the first tab, and the first protrusion overlaps with the first tab in an interference manner; and/or the second adapting member is provided with a second protrusion on a side close to the second tab, and the second protrusion overlaps with the second tab in an interference manner. The arrangement of the first protrusion and the second protrusion can improve the structural strength of the first adapting member and the second adapting member, reducing deformation of the first adapting member and the second adapting member in the assembly process. In addition, the first protrusion overlaps with the first tab in an interference manner, and the second protrusion overlaps with the second tab in an interference manner, so that false welding can be prevented, and stable connection between the first adapting member and the first tab and between the second adapting member and the second tab can be ensured.

In some embodiments, the pole includes a first pole and a second pole, the first pole and the second pole are arranged outside the housing at a same side, the first pole is connected to the first adapting member, and the second pole is connected to the second adapting member. Through the first pole and the second pole, it is convenient to output or input the electric energy of the battery cell.

In some embodiments, a first step is formed on a side of the first adapting member away from the first pole, and a second step is formed on a side of the second adapting member away from the second pole. This facilitates the positioning or support of the first adapting member and the second adapting member, and the welding connection between the first adapting member and the first tab and between the second adapting member and the second tab, thereby improving production line efficiency and reducing battery production costs.

In some embodiments, a cross section of the wound cell is oval, and the oval cross section of the wound cell has a major axis of l and a minor axis of w, a ratio of the minor axis to the major axis being 0.1 ≤ w/l < 1. Through control of a range of w/l, the tab of the wound cell after winding is easier to be flattened.

In some embodiments, the ratio of the minor axis to the major axis is 0.5 ≤ w/l < 1, so that the tab of the wound cell after winding is easier to be flattened.

In some embodiments, a cross section of the wound cell is circular. For a cylindrical wound cell, a winding speed is faster and a hot pressing process is eliminated, thus increasing production capacity.

In some embodiments, a distance between the first flattened plane and a first edge of the first coated region adjacent thereto is 2 mm to 3 mm; and a distance between the second flattened plane and a second edge of the second coated region adjacent thereto is 2 mm to 3 mm. This is to avoid detachment of the active material of the first coated region and the second coated region during the flattening process.

In some embodiments, the housing is a rectangular housing. With the tab of the wound cell formed into the flattened plane covering the end surface of the wound cell, a drawback in the related art where a plurality of tabs after die-cutting need to be aligned to stably connect to the adapting member can be overcome. This facilitates a direct overlapping between the adapting member and the plurality of tabs of the wound cell in an interference manner, enabling placement of one or more wound cells inside the rectangular housing. Thus, it allows for an increase in battery energy without altering the appearance of the battery.

According to a second aspect, an embodiment of this application provides a battery, including the battery cell according to any one of the first aspect.

According to a third aspect, an embodiment of this application provides an electric apparatus, including the battery according to the second aspect, where the battery is configured to supply electric energy.

According to a fourth aspect, an embodiment of this application provides a method for manufacturing a battery cell, including:
providing a housing, where the housing is filled with an electrolyte;
providing at least one wound cell arranged in the housing, where each wound cell has a tab, and the tab at at least one end forms a flattened plane covering an end surface of the wound cell;
providing a pole; and
providing an adapting member, where the adapting member connects the pole to the tabs of the at least two wound cells.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BENEFICIAL EFFECTS

In the technical solution of the embodiments of this application, the tab at at least one end forms a flattened plane covering an end surface of the wound cell. Compared with the full tab design, this design saves battery space and reduces the sacrifice of battery energy. In addition, the flattened plane can be stably connected to the adapting member, overcoming the need to align a plurality of tabs for a stable connection to the adapting plate. This improves production line efficiency and reduces battery production costs.

### BRIEF DESCRIPTION OF DRAWINGS

To describe technical solutions in the embodiments of this disclosure or in the prior art more clearly, the following briefly describes the accompanying drawings required in the embodiments or the prior art. Apparently, the accompanying drawings in the following descriptions merely show some embodiments of this disclosure, and persons of ordinary skill in the art may still derive other embodiments from these accompanying drawings.
FIG. 1 is a schematic structural diagram of a vehicle according to some embodiments of this application;
FIG. 2 is a schematic structural exploded view of a battery according to some embodiments of this application;
FIG. 3 is a schematic structural cross-sectional view of a battery cell in direction Z according to some embodiments of this application;
FIG. 4 is a schematic structural diagram of a wound cell according to some embodiments of this application;
FIG. 5 is a schematic structural cross-sectional view of a wound cell in direction Z according to some embodiments of this application;
FIG. 6 is a schematic structural diagram of a first electrode plate with a first coated region and a first uncoated region or a second electrode plate with a second coated region and a second uncoated region according to some embodiments of this application;
FIG. 7 is a schematic structural diagram of a first electrode plate with a first coated region and a plurality of third uncoated regions or a second electrode plate with a second coated region and a plurality of fourth uncoated regions according to some embodiments of this application;
FIG. 8 is a schematic structural diagram of a first adapting member or a second adapting member according to some embodiments of this application;
FIG. 9 is a schematic structural diagram of a battery cell having a wound cell with an oval cross section according to some embodiments of this application (the wound cell is provided in one);
FIG. 10 is a schematic structural diagram of a battery cell having a wound cell with an oval cross section according to some embodiments of this application (the wound cell is provided in two);
FIG. 11 is a schematic structural diagram of a battery cell having a wound cell with a circular cross section according to some embodiments of this application (the wound cell is provided in two); and
FIG. 12 is a schematic structural diagram of a battery cell having a wound cell with an oval cross section according to some embodiments of this application (the wound cell is provided in three).

Reference signs in specific embodiments are as follows:
vehicle 1,
battery 10, motor 20, controller 30,
battery cell 100, housing 101, wound cell 102, pole 103, adapting member 104, tab 105,
first end 102-1, second end 102-2,
first electrode plate 1021, second electrode plate 1022, separator 1023,
first coated region 1021-1, first uncoated region 1021-2, second coated region 1022-1, second uncoated region 1022-2, third uncoated region 1021-3, fourth uncoated region 1022-3, first edge 1021-10, second edge 1022-10,
first pole 103-1, second pole 103-2,
first adapting member 104-1, second adapting member 104-2, first protrusion 104-10, second protrusion 104-20, first step 104-11, second step 104-21,
first tab 105-1, second tab 105-2,
box 200, upper cover 201, and box shell 202.

### EMBODIMENTS OF THE PRESENT INVENTION

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

Currently, from a perspective of market development, application of batteries is becoming more and more extensive. Batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous expansion of application fields of batteries, market demands for the batteries are also expanding and higher requirements are imposed on the energy density and manufacturing costs of the batteries.

The applicant has noticed that in the related art, the battery wound cell is formed by winding a positive electrode plate, a separator, and a negative electrode plate, where the positive electrode plate and the negative electrode plate are divided into a coated part and an uncoated part, and the coated part is coated with an active material. The uncoated part may form a full tab without die-cutting, and the full tab is directly connected to the pole through an adapting plate. In this way, the current inside the battery can be conducted to the outside of the battery. However, the full tab occupies a large space of the battery, which will cause the sacrifice of battery energy. The uncoated part may alternatively be die-cut to form a plurality of tabs. However, to ensure the effective connection between the plurality of tabs and the adapting plate, the plurality of tabs need to be aligned during the winding to form the wound cell, leading to low production efficiency of battery production lines and increased battery manufacturing costs.

To address the above issues, the applicant has discovered through research that by forming the tabs of the battery wound cell into a flattened plane covering an end surface of the battery wound cell, the battery space can be saved, and the sacrifice of battery energy can be reduced. In addition, the flattened plane can be stably connected to the adapting member, overcoming the need to align a plurality of tabs for a stable connection to the adapting member. This improves production line efficiency and reduces battery production costs.

The battery cell disclosed in the embodiments of this application may be used without limitation in an electric apparatus such as a vehicle, a ship, or an aircraft. The electric apparatus may be but is not limited to a mobile phone, a tablet, a laptop computer, an electric toy, an electric tool, an electric bicycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

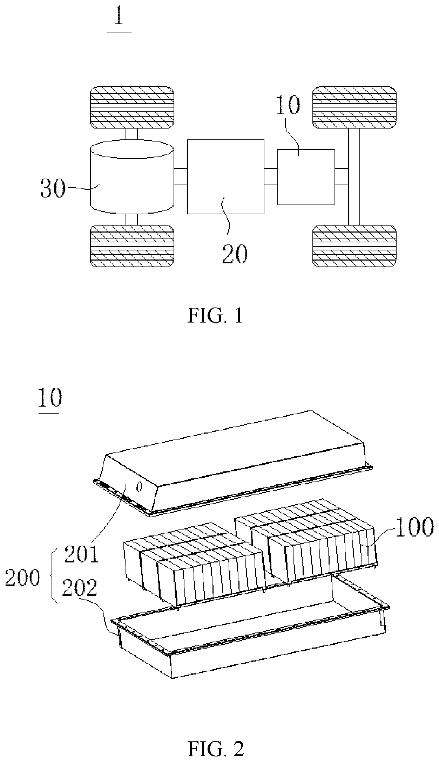

FIG. 1 is a schematic structural diagram of an electric device vehicle 1 using a battery 10 according to an embodiment of this application. The vehicle 1 may be a fossil fuel vehicle, a natural gas vehicle, or a new energy vehicle, and the new energy vehicle may be a battery electric vehicle, a hybrid electric vehicle, a range-extended electric vehicle, or the like. A battery 10, a motor 20, and a controller 30 may be arranged inside the vehicle 1. The battery 10 may be arranged at the bottom, front, or rear of the vehicle 1. The battery 10 may be configured to supply power to the vehicle 1. For example, the battery 10 may be used as an operational power source for the vehicle 1 which is configured for a circuit system of the vehicle 1, for example, to satisfy power needs of start, navigation, and running of the vehicle 1. The controller 30 is configured to control the battery 10 to supply power to the motor 40.

In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

As shown in FIG. 2, the battery 10 mentioned in the embodiments of this application is a single physical module that includes one or more battery cells 100 for providing a higher voltage and capacity. For example, the battery 10 mentioned in this application may include a battery module, a battery pack, or the like. A battery 10 typically includes a box 200 configured to enclose one or more battery cells 100. The box 200 can prevent liquids or other foreign matter from affecting charging or discharging of the battery cell. Specifically, the box 200 may include an upper cover 201 and a box shell 202, and the upper cover 201 and the box shell 202 are snap-fitted together. Shapes of the upper cover 201 and the box shell 202 may be determined depending on a shape in which the plurality of battery cells 100 are combined.

The plurality of battery cells 100 may be connected in series and/or in parallel through a pole for various application scenarios. In some high-power application scenarios such as an electric vehicle, the application of the battery includes three levels: a battery cell, a battery module, and a battery pack. The battery module is formed by electrically connecting a specific quantity of battery cells and putting the battery cells into a frame to protect the battery cells from external impact, heat, vibration, and the like. The battery pack is a final state of a battery system assembled in an electric vehicle. Generally, a battery pack includes a box configured to package one or more battery cells. The box can prevent liquids or other foreign matter from affecting charging or discharging of the battery cell. A box typically includes a cover and a box shell. Most existing battery packs are manufactured by installing various control and protection systems such as a battery management system (BMS) and a thermal management component on one or more battery modules. With the development of technologies, the battery module may be omitted, that is, the battery pack is directly formed using battery cells. With this improvement, weight energy density and volumetric energy density of the battery system are improved, and a quantity of components is remarkably reduced. The battery mentioned in this application includes a battery module or a battery pack.

In this application, the battery cell 100 may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application.

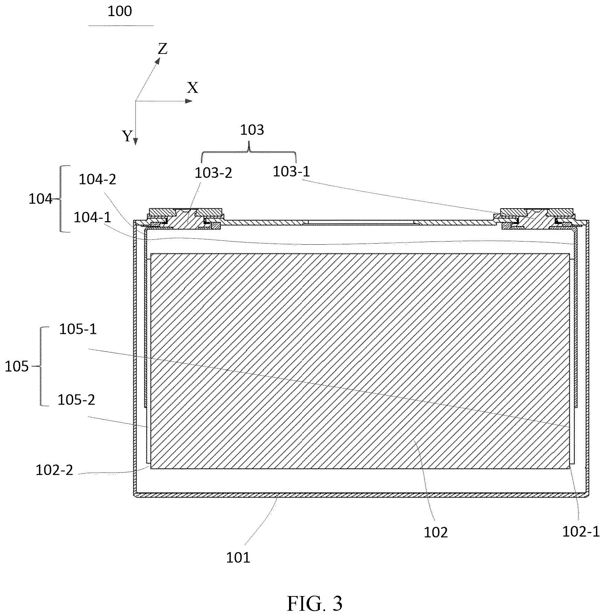

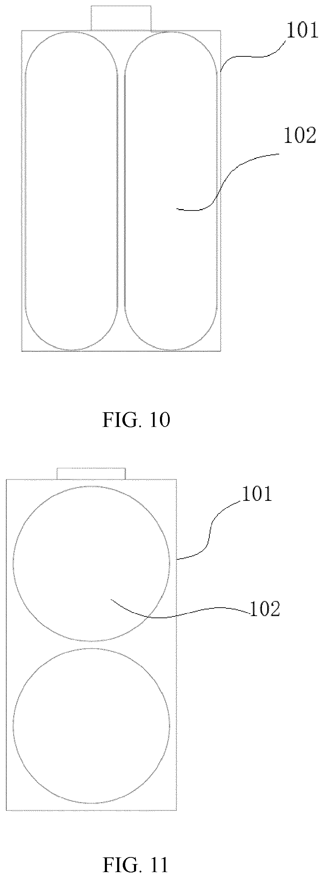

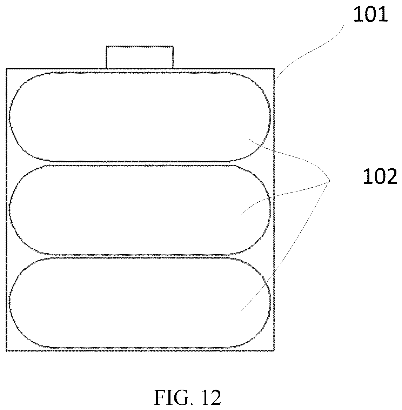

As shown in FIG. 3, FIG. 4, and FIGs. 8 to 12, embodiments of the first aspect of this application propose a battery cell 100, where the battery cell 100 includes a housing 101, a wound cell 102, a pole 103, and an adapting member 104. The wound cell 102 is provided in at least one, and the at least one wound cell 102 is arranged in the housing 101. Each wound cell 102 has a tab 105, and the tab 105 at at least one end forms a flattened plane covering an end surface of the wound cell 102. The adapting member 104 connects the pole 103 to the tabs 105 of the at least two wound cells 102.

As shown in the figure, direction X is a width direction of the wound cell 102, direction Y is a height direction of the wound cell 102, and direction Z is a thickness direction of the wound cell 102.

The housing 101 is a component configured to form the internal environment of the battery cell 100 together with the end cover, where the internal environment formed may be used to contain the wound cell, electrolyte, and other components. The housing 101 and the end cover may be independent components, an opening may be provided in the housing 101, and the end cover covers the opening to form the internal environment of the battery cell 100. Without limitation, the housing 101 and the end cover may alternatively be integrated. Specifically, the housing 101 and the end cover may form a shared connection surface before other components are disposed inside the housing, and then the end cover covers the housing 101 when the inside of the housing 101 needs to be enclosed. The housing 101 may be of various shapes and sizes, such as a cuboid shape, a cylindrical shape, and a hexagonal prism shape. Specifically, the shape of the housing 101 may be determined based on a specific shape and size of a wound cell. The housing 101 may be made of various materials, such as copper, iron, aluminum, stainless steel, aluminum alloy, and plastic, which are not particularly limited in the embodiments of this application.

The wound cell 102 is a component in which electrochemical reactions take place in the battery cell 100.

The pole 103 is a functional component for outputting or inputting the electric energy of the battery cell 100. For example, the pole 103 may be configured to electrically connect to the wound cell 102 to output or input the electric energy of the battery cell 100, which can be made of a material with good electrical conductivity, such as a metal material.

The adapting member 104 is a functional component for electrically connecting the wound cell 102 with the pole 103 to output or input the electric energy of the battery cell 100.

In the battery cell 100 of the embodiments of this application, the tab 105 on the wound cell 102 forms the flattened plane covering the end surface of the wound cell 102, which can reduce the battery space occupied by the tab, and increase the winding space, thereby improving the energy density of the battery cell 100 and overcoming the sacrifice of battery energy caused by the large battery space occupied by the tab in the related art. In addition, the flattened plane can be stably connected to the adapting member, overcoming the need to align a plurality of tabs for a stable connection to the adapting plate. This improves production line efficiency and reduces battery production costs.

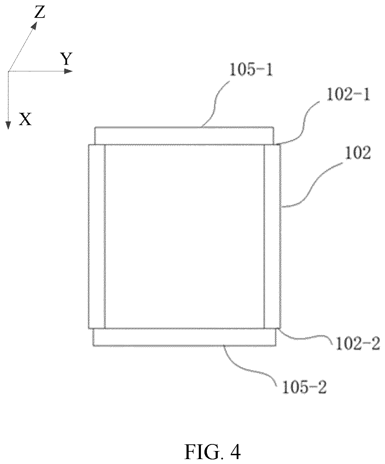

According to some embodiments of this application, as shown in FIGs. 3 and 4, the tab 105 includes a first tab 105-1 arranged at a first end 102-1 of the wound cell 102 and a second tab 105-2 arranged at a second end 102-2 of the wound cell 102, where the first tab 105-1 forms a first flattened plane covering an end surface of the first end 102-1, and/or the second tab 105-2 forms a second flattened plane covering an end surface of the second end 102-2. It can be understood that the polarities of the first tab 105-1 and the second tab 105-2 are opposite to each other. For example, when the first tab 105-1 is a positive tab, the second tab 105-2 is a negative tab; and when the first tab 105-1 is a negative tab, the second tab 105-2 is a positive tab.

The first end 102-1 and the second end 102-2 are respectively two ends of the wound cell 102 distributed along the direction X.

The first tab 105-1 at the first end 102-1 of the wound cell 102 forms the first flattened plane covering the end surface of the first end 102-1 and/or the second tab 105-2 at the second end 102-1 forms the second flattened plane covering the end surface of the second end 102-2, such that the space occupied by the tab 105 at the end surface of the wound cell 102 can be reduced, and the winding space can be increased, thereby improving the energy density of the battery cell 100.

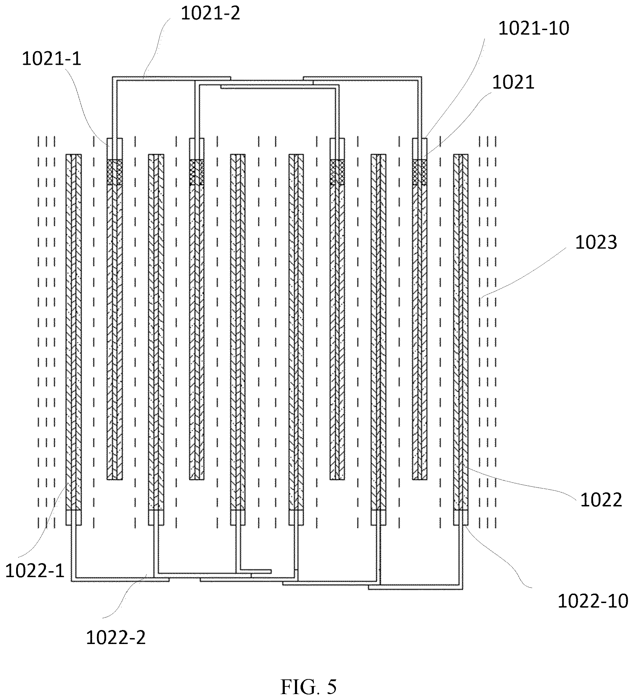

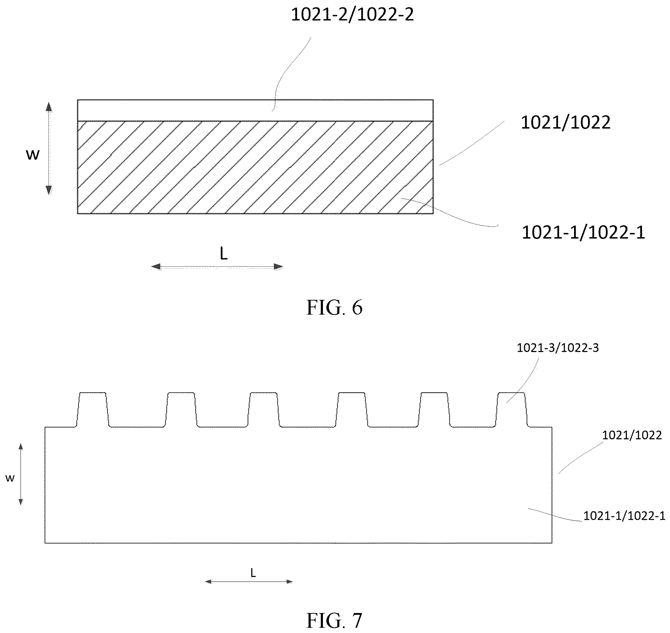

According to some embodiments of this application, as shown in FIGs. 5 and 6, the wound cell 102 is formed by jointly winding a first electrode plate 1021, a second electrode plate 1022, and a separator 1023 located between the first electrode plate 1021 and the second electrode plate 1022, where the first electrode plate 1021 has a first current collector, and the first current collector includes a first coated region 1021-1 and a first uncoated region 1021-2, the first uncoated region 1021-2 being located at the first end 102-1 of the wound cell 102 to form the first tab 105-1; and the second electrode plate 1022 has a second current collector, and the second current collector includes a second coated region 1022-1 and a second uncoated region 1022-2, the second uncoated region 1022-2 being located at the second end 102-2 of the wound cell 102 to form the second tab 105-2, where after flattened, the first uncoated regions 1021-2 sequentially overlap with each other from the outside to the center of the wound cell 102 so that the first tab 105-1 forms the first flattened plane covering the end surface of the first end 102-1; and/or after flattened, the second uncoated regions 1022-2 sequentially overlap with each other from the outside to the center of the wound cell 102 so that the second tab 105-2 forms the second flattened plane covering the end surface of the second end 102-2.

The polarities of the first electrode plate 1021 and the second electrode plate 1022 are opposite. For example, when the first electrode plate 1021 is a positive electrode plate, the second electrode plate 1022 is a negative electrode plate. Correspondingly, the first current collector is a positive electrode current collector, the second current collector is a negative electrode current collector, the first tab 105-1 is a positive tab, and the second tab 105-2 is a negative tab. Certainly, when the first electrode plate 1021 is a negative electrode plate, the second electrode plate 1022 is a positive electrode plate. Correspondingly, the first current collector is a negative electrode current collector, the second current collector is a positive electrode current collector, the first tab 105-1 is a negative tab, and the second tab 105-2 is a positive tab.

Generally, the positive electrode plate includes a positive electrode current collector and a positive electrode active material layer arranged on at least one surface of the positive electrode current collector, and the positive electrode active material layer includes a positive electrode active material. The negative electrode plate includes a negative electrode current collector and a negative electrode active material layer arranged on at least one surface of the negative electrode current collector, and the negative electrode active material layer includes a negative electrode active material. Both the positive electrode current collector and the negative electrode current collector may be a metal foil current collector or a composite current collector.

The first coated region 1021-1 is a region on the first current collector provided with the active material.

The first uncoated region 1021-2 is a region on the first current collector not provided with the active material and located at the first end 102-1 of the wound cell 102.

The first coated region 1021-1 and the second uncoated region 1021-2 are adjacently distributed on the first current collector along its width direction W (corresponding to the width direction of the wound cell 102).

The second coated region 1022-1 is a region on the first current collector provided with the active material.

The second uncoated region 1022-2 is a portion of the second current collector not provided with the active material and located at the second end 102-2 of the wound cell 102.

The first coated region 1022-1 and the second uncoated region 1022-2 are adjacently distributed on the second current collector along its width direction W (corresponding to the width direction of the wound cell 102).

The outside of the wound cell 102 refers to a peripheral edge of the cross section of the wound cell 102.

The center of the wound cell 102 refers to a center line of the cross section of the wound cell 102.

Both the first uncoated region 1021-2 and the second uncoated region 1022-2 are not die-cut, that is, both the first electrode plate 1021 and the second electrode plate 1022 adopt a full-tab design. The first uncoated regions 1021-2 and/or the second uncoated regions 1022-2 are flattened by a flattening device, such that after flattened, the first uncoated regions 1021-2 sequentially overlap with each other from the outside to the center of the wound cell 102 and the first tab 105-1 forms the first flattened plane covering the end surface of the first end 102-1; and/or after flattened, the second uncoated regions 1022-2 sequentially overlap with each other from the outside to the center of the wound cell 102 and the second tab 105-2 forms the second flattened plane covering the end surface of the second end 102-2. This can effectively reduce the battery space occupied by the full tab and increase the winding space, thereby improving the energy density of the battery cell 100.

According to some embodiments of this application, as shown in FIGs. 5 and 7, the wound cell 102 is formed by jointly winding a first electrode plate 1021, a second electrode plate 1022, and a separator 1023 located between the first electrode plate 1021 and the second electrode plate 1022, where the first electrode plate 1021 has a first current collector, and the first current collector includes a first coated region 1021-1 and a plurality of third uncoated regions 1021-3 spaced apart along a length direction L of the first current collector, the plurality of third uncoated regions 1021-3 being located at the first end 102-1 of the wound cell 102 to form the first tab 105-1; and the second electrode plate 1022 has a second current collector, and the second current collector includes a second coated region 1022-1 and a plurality of fourth uncoated regions 1022-3 spaced apart along a length direction L of the second current collector, the plurality of fourth uncoated regions 1022-3 being located at the second end 102-2 of the wound cell 102 to form the second tab 105-2; where after flattened, the plurality of third uncoated regions 1021-3 sequentially overlap with each other from the outside to the center of the wound cell 102 while simultaneously sequentially overlapping with each other along a winding direction of the wound cell 102, so that the first tab 105-1 forms the first flattened plane covering the end surface of the first end 102-1; and/or after flattened, the plurality of fourth uncoated regions 1022-3 sequentially overlap with each other from the outside to the center of the wound cell 102 while simultaneously sequentially overlapping with each other along the winding direction of the wound cell 102, so that the second tab 105-2 forms the second flattened plane covering the end surface of the second end 102-2.

The first coated region 1021-1 is a region on the first current collector provided with the active material.

The plurality of third uncoated regions 1021-3 are portions of the first current collector not provided with the active material and located at the first end 102-1 of the wound cell 102.

The first coated region 1021-1 and the plurality of third uncoated regions 1021-3 are adjacently distributed on the first current collector along its width direction W (corresponding to the width direction of the wound cell 102).

The second coated region 1022-1 is a region on the first current collector provided with the active material.

The plurality of fourth uncoated regions 1022-3 are portions of the second current collector not provided with the active material and located at the second end 102-2 of the wound cell 102.

The second coated region 1022-1 and the plurality of fourth uncoated regions 1022-3 are adjacently distributed on the second current collector along its width direction W (corresponding to the width direction of the wound cell 102).

After flattened, the plurality of third uncoated regions 1021-3 sequentially overlap with each other from the outside to the center of the wound cell 102 while simultaneously sequentially overlapping with each other along the winding direction of the wound cell 102, so that the first tab 105-1 forms the first flattened plane covering the end surface of the first end 102-1; and/or after flattened, the plurality of fourth uncoated regions 1022-3 sequentially overlap with each other from the outside to the center of the wound cell 102 while simultaneously sequentially overlapping with each other along the winding direction of the wound cell 102, so that the second tab 105-2 forms the second flattened plane covering the end surface of the second end 102-2. This can overcome a drawback in the related art where a plurality of tabs after die-cutting need to be aligned to stably connect to the adapting member, facilitating the connection between the tabs and the adapting member, thereby improving production line efficiency and reducing battery production costs. In addition, this can reduce the space occupied by the connection part between the tabs and the adapting member 104 at an end portion of the wound cell 102, increase the winding space, and effectively improve the energy density of the battery cell 100. Furthermore, electrolyte can enter the wound cell 102 from the overlapping gaps between the plurality of third uncoated regions 1021-3 and/or fourth uncoated regions 1022-3, thereby enhancing the infiltration effect.

According to some embodiments of this application, as shown in FIGs. 5 to 7, the wound cell 102 is formed by jointly winding a first electrode plate 1021, a second electrode plate 1022, and a separator 1023 located between the first electrode plate 1021 and the second electrode plate 1022, where the first electrode plate 1021 has a first current collector, and the first current collector includes a first coated region 1021-1 and a first uncoated region 1021-2, the first uncoated region 1021-2 being located at the first end 102-1 of the wound cell 102 to form the first tab 105-1; and the second electrode plate 1022 has a second current collector, and the second current collector includes a second coated region 1022-1 and a plurality of fourth uncoated regions 1022-3 spaced apart along a length direction L of the second current collector, the plurality of fourth uncoated regions 1022-3 being located at the second end 102-2 of the wound cell 102 to form the second tab 105-2; where after flattened, the first uncoated regions 1021-2 sequentially overlap with each other from the outside to the center of the wound cell 102 so that the first tab 105-1 forms the first flattened plane covering the end surface of the first end 102-1; and/or after flattened, the plurality of fourth uncoated regions 1022-3 sequentially overlap with each other from the outside to the center of the wound cell 102 while simultaneously sequentially overlapping with each other along the winding direction of the wound cell 102, so that the second tab 105-2 forms the second flattened plane covering the end surface of the second end 102-2.

After flattened, the first uncoated regions 1021-2 sequentially overlap with each other from the outside to the center of the wound cell 102 so that the first tab 105-1 forms the first flattened plane covering the end surface of the first end 102-1; and/or after flattened, the plurality of fourth uncoated regions 1022-3 sequentially overlap with each other from the outside to the center of the wound cell 102 while simultaneously sequentially overlapping with each other along the winding direction of the wound cell 102, so that the second tab 105-2 forms the second flattened plane covering the end surface of the second end 102-2. This can effectively reduce the battery space occupied by a full tab in the related art and increase the winding space, thereby improving the energy density of the battery cell 100. This can overcome the drawback in the related art where a plurality of tabs after die-cutting need to be aligned to stably connect to the adapting member, facilitating the connection between the tabs and the adapting member, thereby improving production line efficiency and reducing battery production costs. In addition, this can reduce the space occupied by the connection part between the tabs and the adapting member 104 at an end portion of the wound cell 102, increase the winding space, and effectively improve the energy density of the battery cell 100.

According to some embodiments of this application, the adapting member 104 includes a first adapting member 104-1 and a second adapting member 104-2, the first adapting member 104-1 overlaps with the first tab 105-1 of the at least one wound cell, and the second adapting member 104-2 overlaps with the second tab 105-2 of the at least one wound cell. When the first tab 105-1 forms the first flattened plane covering the end surface of the first end 102-1, and the second tab 105-2 forms the second flattened plane covering the end surface of the second end 102-2, the first adapting member 104-1 and the second adapting member 104-2 do not need to be bent. The first adapting member 104-1 can directly overlap with the first tab 105-1 in an interference manner and then be welded together, and the second adapting member 104-2 can directly overlap with the second tab 105-2 in an interference manner and then be welded together. This simplifies the production process of the battery cell 100. In addition, this can reduce the space occupied by the connection part between the tabs and the adapting member 104 at an end portion of the wound cell 102, increase the winding space, and effectively improve the energy density of the battery cell 100.

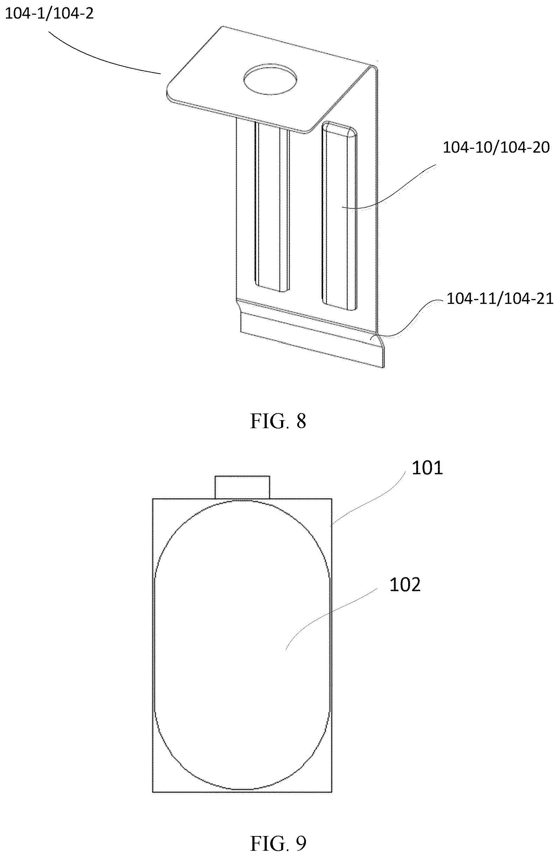

According to some embodiments of this application, as shown in FIG. 8, the first adapting member 104-1 is provided with a first protrusion 104-10 on a side close to the first tab 105-1, and the first protrusion 104-10 overlaps with the first tab 105-1 in an interference manner, and/or the second adapting member 104-2 is provided with a second protrusion 104-20 on a side close to the second tab 105-2, and the second protrusion 104-20 overlaps with the second tab 105-2 in an interference manner.

The first protrusion 104-10 may be a boss formed on the first adapting member 104-1 by stamping, the first protrusion 104-10 may be strip-shaped, and the second protrusion 104-10 may be provided in one or plurality.

The second protrusion 104-20 may be a boss formed on the first adapting member 104-2 by stamping, the second protrusion 104-20 may be strip-shaped, and the second protrusion 104-20 may be provided in one or plurality.

The arrangement of the first protrusion 104-10 and the second protrusion 104-20 can improve the structural strength of the first adapting member 104-1 and the second adapting member 104-2, reducing deformation of the first adapting member 104-1 and the second adapting member 104-2 in the assembly process. In addition, the first protrusion 104-10 overlaps with the first tab 105-1 in an interference manner, and the second protrusion 104-20 overlaps with the second tab 105-2 in an interference manner, so that false welding can be prevented, and stable connection between the first adapting member 104-1 and the first tab 105-1 and between the second adapting member 104-2 and the second tab 105-2 can be ensured.

According to some embodiments of this application, the pole 103 includes a first pole 103-1 and a second pole 103-2, the first pole 103-1 and the second pole 103-2 are arranged outside the housing 101 at a same side, the first pole 103-1 is connected to the first adapting member 104-1, and the second pole 103-2 is connected to the second adapting member 104-2. The first pole 103-1 and the second pole 103-2 can facilitate output or input of the electric energy of the battery cell 100.

According to some embodiments of this application, as shown in FIG. 8, a first step 104-11 is formed on a side of the first adapting member 104-1 away from the first pole 103-1, and a second step 104-21 is formed on a side of the second adapting member 104-2 away from the second pole 103-2.

The first step 104-11 may be formed on the first adapting member 104-1 by bending, and the second step 104-21 may be formed on the first adapting member 104-2 by bending.

The arrangement of the first step 104-11 and the second step 104-21 can facilitate the positioning or support of the first adapting member 104-1 and the second adapting member 104-2, and the welding connection between the first adapting member 104-1 and the first tab 105-1 and between the second adapting member 104-2 and the second tab 105-2, thereby improving production line efficiency and reducing battery production costs.

According to some embodiments of this application, a cross section of the wound cell 102 is oval, and the oval cross section of the wound cell has a major axis of l and a minor axis of w, a ratio of the minor axis to the major axis being 0.1w/l < 1. Optionally, the ratio of the minor axis to the major axis is 0.5 ≤ w/l < 1. Through control of a range of w/l, the tab of the wound cell 102 after winding is easier to be flattened.

According to some embodiments of this application, the cross section of the wound cell 102 is circular. For a cylindrical wound cell 102, a winding speed is faster and a hot pressing process is eliminated, thus increasing production capacity.

According to some embodiments of this application, a distance between the first flattened plane and a first edge 1021-10 of the first coated region 1021-1 adjacent thereto is 2 mm to 3 mm; and a distance between the second flattened plane and a second edge 1022-10 of the second coated region 1022-1 adjacent thereto is 2 mm to 3 mm.

The first flattened plane is obtained by flattening the first uncoated region 1021-2 or a plurality of third uncoated regions 1021-3, so that there is 2 mm to 3 mm between the first flattened plane and the first edge 1021-10 of the first coated region 1021-1 adjacent thereto. That is, this ensures the presence of a safety zone between the first coated region 1021-1 and the first uncoated region 1021-2 or between the first coated region 1021-1 and a plurality of third uncoated regions 1021-3, to prevent the detachment of the active material of the first coated region 1021-1 during the flattening process. Similarly, there is 2 mm to 3 mm between the second flattened plane and the first edge 1022-10 of the second coated region 1022-1 adjacent thereto. That is, this ensures the presence of a safety zone between the second coated region 1022-1 and the first uncoated region 1022-2 or between the first coated region 1022-1 and a plurality of fourth uncoated regions 1022-3, to prevent the detachment of the active material of the second coated region 1022-1 during the flattening process.

According to some embodiments of this application, the housing 101 is a rectangular housing. With the tab 105 of the wound cell 102 formed into the flattened plane covering the end surface of the wound cell, the drawback in the related art where a plurality of tabs after die-cutting need to be aligned to stably connect to the adapting member can be overcome. This facilitates a direct overlapping between the adapting member 104 and the plurality of tabs 105 of the wound cell in an interference manner, enabling placement of one or more wound cells inside the rectangular housing. Thus, it allows for an increase in battery energy without altering the appearance of the battery.

According to some embodiments of this application, the battery cell 100 includes a housing 101, a wound cell 102, a pole 103, and an adapting member 104. The wound cell 102 is provided in at least one, and the at least one wound cell 102 is arranged in the housing 101. Each wound cell 102 has a tab 105, and the tab 105 includes a first tab 105-1 arranged at a first end 102-1 of the wound cell 102 and a second tab 105-2 arranged at a second end 102-2 of the wound cell 102, where the first tab 105-1 forms a first flattened plane covering an end surface of the first end 102-1, and the second tab 105-2 forms a second flattened plane covering an end surface of the second end 102-2. The adapting member 104 includes a first adapting member 104-1 and a second adapting member 104-2, the first adapting member 104-1 overlaps with the first tab 105-1 of the at least one wound cell 102, and the second adapting member 104-2 overlaps with the second tab 105-2 of the at least one wound cell 102.

In the battery cell 100 of the embodiments of this application, the first tab 105-1 forms the first flattened plane covering the end surface of the first end 102-1 of the wound cell 102, and the second tab 105-2 forms the first flattened plane covering the end surface of the first end 102-2 of the wound cell 102, which can effectively reduce the battery space occupied by the connection part between the tab and the adapting member, increase the winding space, and further improve the energy density of the battery cell 100. In addition, the flattened plane can be stably connected to the adapting member, overcoming the need to align a plurality of tabs for a stable connection to the adapting plate. This improves production line efficiency and reduces battery production costs.

A second aspect of this application provides a battery, including the battery cell 100 in any one of the embodiments of the first aspect.

In the battery cell 100 of the battery of the embodiments of this application, the tab 105 on the wound cell 102 forms the flattened plane covering the end surface of the wound cell 102, which can reduce the battery space occupied by the tab, and increase the winding space, thereby improving the energy density of the battery cell 100 and overcoming the sacrifice of battery energy caused by the large battery space occupied by the tab in the related art. In addition, the flattened plane can be stably connected to the adapting member, overcoming the need to align a plurality of tabs for a stable connection to the adapting plate. This improves production line efficiency and reduces battery production costs.

A third aspect of this application proposes an electric apparatus, including the battery in the second aspect, where the battery is configured to supply electric energy to the electric apparatus.

In the battery cell 100 of the battery of the electric apparatus of the embodiments of this application, the tab 105 on the wound cell 102 forms the flattened plane covering the end surface of the wound cell 102, which can reduce the battery space occupied by the tab, and increase the winding space, thereby improving the energy density of the battery cell 100 and overcoming the sacrifice of battery energy caused by the large battery space occupied by the tab in the related art. In addition, the flattened plane can be stably connected to the adapting member, overcoming the need to align a plurality of tabs for a stable connection to the adapting plate. This improves production line efficiency and reduces battery production costs.

A fourth aspect of this application proposes a method for manufacturing a battery cell, where the method includes:
providing a housing 101, where the housing 101 is filled with an electrolyte;
providing at least one wound cell 102 arranged in the housing 101, where each wound cell 102 has a tab 105, and the tab 105 at at least one end forms a flattened plane covering an end surface of the wound cell 102;
providing a pole 103; and
providing an adapting member 104, where the adapting member 104 connects the pole 103 to the tab 105 of the at least one wound cell 102.

In the battery cell 100 manufactured through the battery cell manufacturing method according to the embodiments of this application, the tab 105 on the wound cell 102 forms the flattened plane covering the end surface of the wound cell 102, which can reduce the battery space occupied by the tab, and increase the winding space, thereby improving the energy density of the battery cell 100 and overcoming the sacrifice of battery energy caused by the large battery space occupied by the tab in the related art. In addition, the flattened plane can be stably connected to the adapting member, overcoming the need to align a plurality of tabs for a stable connection to the adapting plate. This improves production line efficiency and reduces battery production costs.

It should be noted that in the specification, relational terms such as "first" and "second" are only used to distinguish one entity or operation from another entity or operation, and do not necessarily require or imply that there is any such actual relationship or order between these entities or operations. Terms "comprise", "include", or any other variations thereof are intended to cover non-exclusive inclusions, such that a process, method, article, or device including a series of elements not only includes these elements, but also includes other elements which are not expressly listed, or further includes elements which are inherent to such process, method, article, or device. In absence of more constraints, an element defined by the statement "including a..." does not exclude existence of other identical elements in the process, method, article, or device including the element.

The embodiments in this application are described in a related manner. For a part that is the same or similar between different embodiments, reference may be made between the embodiments. Each embodiment focuses on differences from other embodiments.

The foregoing descriptions are merely preferred embodiments of this application, and are not intended to limit the protection scope of this application. Any modification, equivalent replacement, improvement, or the like made without departing from the spirit and principle of this application shall be within the protection scope of this application.

## Claims

1. A battery cell, comprising:
a housing;
at least one wound cell arranged in the housing, wherein each wound cell has a tab, and the tab at at least one end forms a flattened plane covering an end surface of the wound cell;
a pole, and
an adapting member, wherein the adapting member connects the pole to the tab of the at least one wound cell.

2. The battery cell according to claim 1, wherein the tab comprises a first tab arranged at a first end of the wound cell and a second tab arranged at a second end of the wound cell, wherein the first tab forms a first flattened plane covering an end surface of the first end and/or the second tab forms a second flattened plane covering an end surface of the second end.

3. The battery cell according to claim 2, wherein the wound cell is formed by jointly winding a first electrode plate, a second electrode plate, and a separator located between the first electrode plate and the second electrode plate, wherein the first electrode plate has a first current collector, and the first current collector comprises a first coated region and a first uncoated region, the first uncoated region being located at the first end of the wound cell to form the first tab; and the second electrode plate has a second current collector, and the second current collector comprises a second coated region and a second uncoated region, the second uncoated region being located at the second end of the wound cell to form the second tab,
wherein after flattened, the first uncoated regions sequentially overlap with each other from the outside to the center of the wound cell so that the first tab forms the first flattened plane covering the end surface of the first end;
and/or after flattened, the second uncoated regions sequentially overlap with each other from the outside to the center of the wound cell so that the second tab forms the second flattened plane covering the end surface of the second end.

4. The battery cell according to claim 2, wherein the wound cell is formed by jointly winding a first electrode plate, a second electrode plate, and a separator located between the first electrode plate and the second electrode plate, wherein the first electrode plate has a first current collector, and the first current collector comprises a first coated region and a plurality of third uncoated regions spaced apart along a length direction of the first current collector, the plurality of third uncoated regions being located at the first end of the wound cell to form the first tab; and the second electrode plate has a second current collector, and the second current collector comprises a second coated region and a plurality of fourth uncoated regions spaced apart along a length direction of the second current collector, the plurality of fourth uncoated regions being located at the second end of the wound cell to form the second tab;
wherein after flattened, the plurality of third uncoated regions sequentially overlap with each other from the outside to the center of the wound cell while simultaneously sequentially overlapping with each other along a winding direction of the wound cell, so that the first tab forms the first flattened plane covering the end surface of the first end;
and/or after flattened, the plurality of fourth uncoated regions sequentially overlap with each other from the outside to the center of the wound cell while simultaneously sequentially overlapping with each other along the winding direction of the wound cell, so that the second tab forms the second flattened plane covering the end surface of the second end.

5. The battery cell according to claim 2, wherein the wound cell is formed by jointly winding a first electrode plate, a second electrode plate, and a separator located between the first electrode plate and the second electrode plate, wherein the first electrode plate has a first current collector, and the first current collector comprises a first coated region and a first uncoated region, the first uncoated region being located at the first end of the wound cell to form the first tab; and the second electrode plate has a second current collector, and the second current collector comprises a second coated region and a plurality of fourth uncoated regions spaced apart along a length direction of the second current collector, the plurality of fourth uncoated regions being located at the second end of the wound cell to form the second tab;
wherein after flattened, the first uncoated regions sequentially overlap with each other from the outside to the center of the wound cell so that the first tab forms the first flattened plane covering the end surface of the first end;
and/or after flattened, the plurality of fourth uncoated regions sequentially overlap with each other from the outside to the center of the wound cell while simultaneously sequentially overlapping with each other along the winding direction of the wound cell, so that the second tab forms the second flattened plane covering the end surface of the second end.

6. The battery cell according to any one of claims 2 to 5, wherein the adapting member comprises a first adapting member and a second adapting member, the first adapting member overlaps with the first tab of the at least one wound cell, and the second adapting member overlaps with the second tab of the at least one wound cell.

7. The battery cell according to claim 6, wherein the first adapting member is provided with a first protrusion on a side close to the first tab, and the first protrusion overlaps with the first tab in an interference manner; and/or the second adapting member is provided with a second protrusion on a side close to the second tab, and the second protrusion overlaps with the second tab in an interference manner.

8. The battery cell according to claim 6, wherein the pole comprises a first pole and a second pole, the first pole and the second pole are arranged outside the housing at a same side, the first pole is connected to the first adapting member, and the second pole is connected to the second adapting member.

9. The battery cell according to claim 8, wherein a first step is formed on a side of the first adapting member away from the first pole, and a second step is formed on a side of the second adapting member away from the second pole.

10. The battery cell according to claim 1, wherein a cross section of the wound cell is oval, and the oval cross section of the wound cell has a major axis of l and a minor axis of w, a ratio of the minor axis to the major axis being 0.1 ≤ w/l < 1.

11. The battery cell according to claim 10, wherein the ratio of the minor axis to the major axis is 0.5 ≤ w/l < 1.

12. The battery cell according to claim 1, wherein a cross section of the wound cell is circular.

13. The battery cell according to any one of claims 3 to 5, wherein a distance between the first flattened plane and a first edge of the first coated region adjacent thereto is 2 mm to 3 mm; and a distance between the second flattened plane and a second edge of the second coated region adjacent thereto is 2 mm to 3 mm.

14. The battery cell according to claim 1, wherein the housing is a rectangular housing.

15. A battery, comprising the battery cell according to any one of claims 1 to 14.

16. An electric apparatus, wherein the electric apparatus comprises the battery according to claim 15, the battery being configured to supply electric energy.

17. A method for manufacturing a battery cell, comprising the following steps:
providing a housing, wherein the housing is filled with an electrolyte;
providing at least one wound cell arranged in the housing, wherein each wound cell has a tab, and the tab at at least one end forms a flattened plane covering an end surface of the wound cell;
providing a pole; and
providing an adapting member, wherein the adapting member connects the pole to the tab of the at least one wound cell.
